# EUROPEAN PATENT APPLICATION

(11) **EP 1 638 057 A1**
(43) Date of publication of application: **22.03.2006**
(21) Application number: 04292242.7
(22) Date of filing: 16.09.2004
(51) Int. Cl.: G07F 7/10

(54) **Method and system for maintenance of a point of sales terminal**

(71) Applicant: Axalto SA, 92120 Montrouge (FR)
(72) Inventor: Grenier, Fabrice Axalto SA, 92120 Montrouge (FR)

(57) **Abstract**

The invention relates to a method and system for maintenance of a point of sales terminal (10 comprising a casing (11) said casing including a central processing unit (14) and a memory (15). According to the invention, the method comprises the following steps: - connecting an electronic device (30) to a data port (16) of the terminal, said electronic device comprising a memory (31); - connecting (41) a maintenance integrated circuit card (20) to the terminal; - allowing authentication (42) of said card; - if the card is authenticated, uploading (44) the application data from the electronic device memory into the terminal memory or downloading application data from the terminal memory to the electronic device memory; and - disconnecting the electronic device and the integrated circuit card from the terminal. In particular, the invention applies to point of sales terminals maintenance wherein the electronic device is a USB key or another portable device.

## Description

The invention relates to a method and system for maintenance of a point of sales terminal.

Point of sales terminals are electronic devices generally used in stores or restaurants for electronic payment transactions. Such terminals comprise a casing said casing including a display, a keypad, a central processing unit and associated memory, and a slot for inserting a payment card, which may be a smart card or not.

When a customer wishes to pay for a good or a service using his/her card, he or she inserts or swipes the card in the terminal slot and possibly inputs a Personal Identification Number (PIN) code associated with the card, using the terminal keypad. Upon authentication of the card and, possibly, after authorisation of the card holder banker, the payment transaction is achieved. A payment receipt is then printed by the terminal, as an evidence of payment. When the payment does not necessitate a PIN code input, the customer should sign the payment receipt.

Examples of terminals known from the state of the art are the MagIC™ series terminals manufactured by Axalto™, for example, the MagIC™ x1000 CDMA, GPRS, GSM, DECT or IR terminals or the MagIC™ 5100 or 6100 terminals.

Point of sales terminals contain software applications that need to be updated from time to time. Also, as part of the terminals maintenance, at bankers request, new software applications may be installed in the terminals. These applications may be free of charge or not.

Terminals maintenance may be achieved on-site using personal computers or master terminals connected to a terminal data port. The computer manages the upload of the application data to the terminal or their download. In addition to this, the master terminal is able to duplicate terminal software applications of a terminal and upload this application to another terminal or even load into a teminal an image of the software environment of another terminal.

Also, terminals maintenance may be achieved using remote terminal management systems like the MagIC™ Management System. This dramatically reduces operating costs of terminals maintenance by curbing on-site interventions. In addition, it provides flexibility and may improve the application installation process.

In the case of a remote terminal maintenance, the terminal is connected, through a communication network such as the Internet or the PSTN, to a dedicated server. This server comprises application data that may be uploaded to the terminal, through the network.

However, all existing solutions of maintenance imply the use of costly and/or voluminous hardware. Accordingly, there is a need to simplify the maintenance of point of sales terminals.

In addition, the control of the terminals maintenance and of the costs associated with the various operations achieved on said terminals as well as the security is not satisfying. Indeed, there is no secure authentication of the individuals achieving the maintenance and the access to the applications data is not fully secured.

As a solution to the above inconvenient of the state of the art, the invention concerns, in a first aspect, a method for maintenance of a point of sales terminal comprising a casing said casing including a central processing unit and a memory, said method comprising: - connecting an electronic device to a data port of the terminal, said electronic device comprising a memory; - connecting a maintenance integrated circuit card to the terminal; - allowing authentication of said card; - if the card is authenticated, uploading the application data from the electronic device memory into the terminal memory or downloading application data from the terminal memory to the electronic device memory; and - disconnecting the electronic device and the integrated circuit card from the terminal.

In a second aspect, the invention concerns a system comprising a point of sales terminal comprising a casing, said casing including a central processing unit, a memory and a data port, characterised in that it further comprises an electronic device able to be connected to said data port and comprising a memory loaded with application data, and a maintenance integrated circuit card able to be connected to the terminal to be authenticated by the terminal, and in that the application data of the electronic device are uploaded in the terminal upon authentication of the maintenance card.

Thus, an authentic integrated circuit card is used for granting access rights to the application data and other maintenance services, in a secure manner.

Advantageously, the integrated circuit card controls the access rights to the application data stored in the electronic device memory; the application data stored in the electronic device memory is encoded; the key for decoding the encoded application data is stored in a memory of the integrated circuit card; the key is loaded into the terminal; the application data are decoded; the application data stored in the memory of the electronic device is paying; the card memory comprises a price list of the application data and prior to installation of said application data, payment is accepted; the electronic device is a USB key and the data port is a USB port; and the integrated circuit card is in a plug-in SIM card format and is inserted into a recess of the electronic device.

In another aspect, the invention concerns a USB key comprising a memory and a removable smart card, advantageously in a plug-in SIM format, the smart card being able to secure the access to some data stored in the USB key memory.

Other features and aspects of the invention will be apparent from the following description and the accompanying drawings, in which:
Fig. 1 is a schematic view of a system according to an embodiment of the invention; and
Fig. 2 illustrates a method for maintenance of a terminal according to an embodiment of the invention.

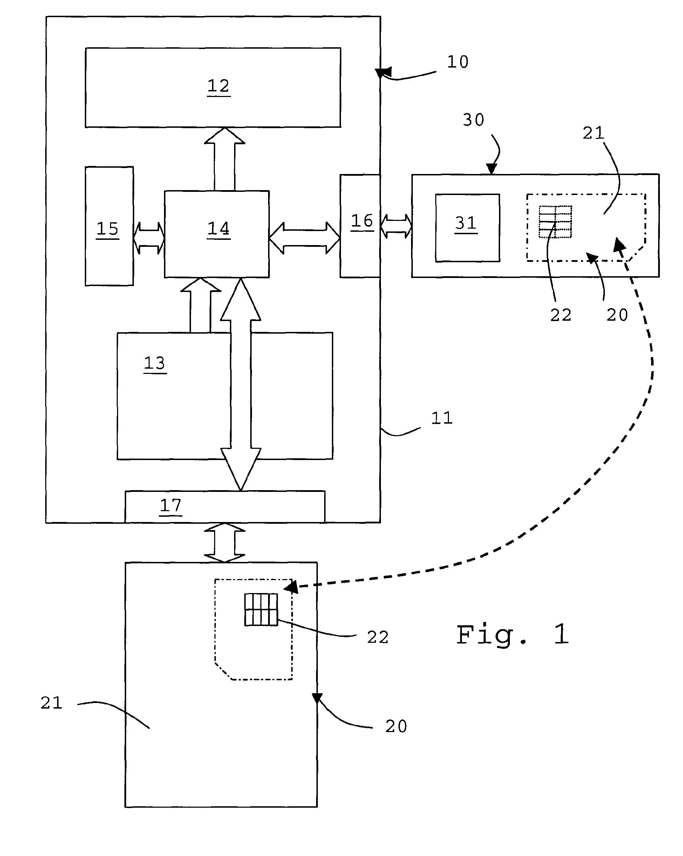

Referring first to fig. 1, the system of the invention comprises a terminal 10, a maintenance integrated circuit (IC) card (or smart card) 20 and an electronic device 30.

The terminal 10 comprises a plastic casing 11 said casing including a display 12, a keypad 13, a central processing unit 14, a memory 15 comprising application data, a USB data port 16 and a slot 17 for inserting a payment card. When inserted, contact pads of the payment card are electrically connected with a connector of the terminal and data may be exchanged in between said payment card and the terminal. The terminal display 12, keypad 13, memory 15, data port 16 and terminal connector are connected with the central processing unit 14 so that said unit may process data or instructions/data received from said keypad 13, memory 15, data port 16 and slot 17 connector and send data/instructions to said memory 15, data port 16, slot 17 connector and to the display 12 using an internal bus system of the terminal 10.

The maintenance IC card 20 is a standard product as defined in the ISO standards, in particular in the ISO 7810 and 7816 standards. It comprises a plastic card body 21, a microcontroller, said microcontroller being electrically connected to contact pads 22 flush with the card surface. The card body 21 may be of a classical format of 85.6 mm length, 54 mm wide and 0.76 mm thickness. However, it may be of a plug-in SIM card format. The microcontroller comprises a EEPROM memory. The size of this memory is very limited. Practically, it is comprised between 16 and 128 kBytes. Therefore, the maintenance card can not store voluminous application data. However, it stores a price list data for access to the application data contained in the USB key memory as well as cryptographic keys needed for decoding the encoded application data in said USB key memory.

According to a preferred embodiment, the electronic device 30 of the system of the invention is a USB key. This USB key comprises a memory 31, for example of 256 Mbytes, allowing storage of a large amount of data, at low cost. Application data are stored in said memory. Certain application data are encrypted whereas other application data are not. The encrypted application data are encoded using a cryptographic algorithm such as the RSA (Rivest Shamir Adleman) or the DES (Data Encryption Standard). These application data may be uploaded from the USB key, when connected to the USB port of the terminal. The communication protocol in between the USB key and the terminal is a USB protocol as disclosed in the USB standards 1.0, 1.1 or 2.0.

The USB key 30 of the system of the invention may comprise a recess for inserting a maintenance card 20 in a plug-in SIM format. Thus, the maintenance card may be directly inserted in the USB key. In such case, the card 20 may comprise a microcontroller able to communicate with the outside world according to a USB protocol as it is the case for Axalto™ eGate™ card products.

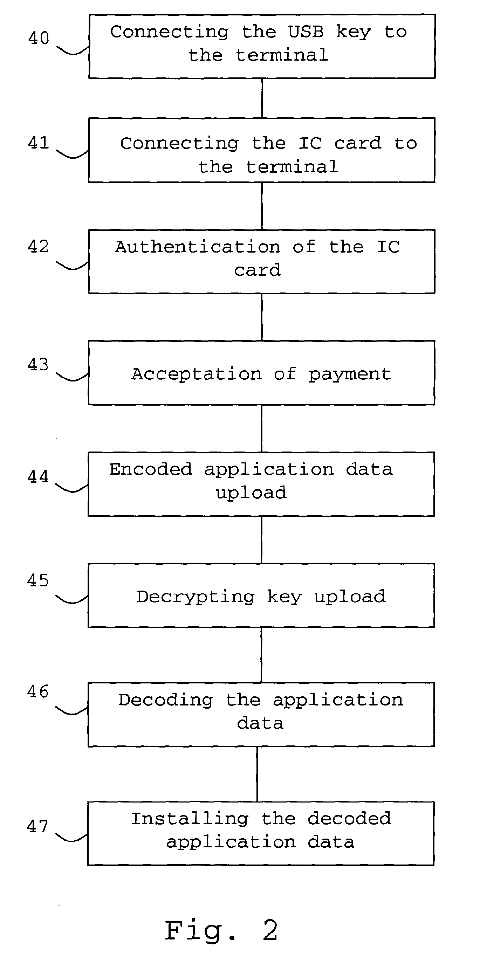

The method of maintenance according to a preferred embodiment of the invention comprises a plurality of steps. These steps are illustrated in Fig. 2.

In a first step, the maintenance menu of the terminal is selected. It is accessed using a required code to be entered using the keypad of the terminal.

In a second step 40, the electronic device, for example, the USB key, is connected to the USE port 16 of the terminal 10. When connected, the USB key driver of the terminal recognises the USB key. Application data, that are free of charge and not encoded in the USB key memory 31, may be uploaded in the terminal 10. Application data, that are not free of charge and/or encoded, can not be uploaded.

In a third step 41, the IC maintenance card 20 is inserted in the card slot 17 of the terminal and its contact pads are electrically connected to the terminal connector. When connected, the integrated circuit card PIN code is requested. The card holder presses the keys of the terminal keypad corresponding to said PIN code. If the PIN code is correct, according to a fourth step 42 of the invention, authentication of the maintenance card is achieved and access to the maintenance services is granted. In fact, once authenticated, the IC card 20 manages the access rights to the application data contained in the memory 31 of the USB key 30. If, however, the card is not authenticated as a maintenance card, then access to the application data contained in the memory of the USE key, which are not free of charge or which are encoded, is denied and the maintenance of the point of sales terminal can not be achieved.

A maintenance software of the terminal manages the maintenance and communication between the maintenance card and the USB key.

If, for the maintenance of the terminal 10, an application has to be uploaded from the USB key 30, then a request for upload of said application in the memory 15 of the terminal is sent to the USB key.

If the application is free of charge, then the application is downloaded and installed in the terminal.

If, however, the application is not free of charge, the maintenance card forbids access to the application without prior authorisation of the card. To this effect, the costs associated with the upload of the application data are extracted from the price list contained in the maintenance card and displayed by the terminal. Also, the card contains an indication of the remaining units which may be used for the installation of the application data that are not free of charge. Upon acceptation of payment (step 43), some units are debited from the remaining units, the upload of the application is allowed (step 44) and the installation of the application is achieved. If there is not enough units for the installation of a particular application, then the upload of said application is forbidden.

If the application stored in the USE key memory 31 is encoded, the key for decrypting the encoded application, which is contained in the card memory, is loaded into the terminal, step 45, and the decrypting takes place in the terminal 10. Once decrypted, according to step 47, the application data are installed within the terminal.

Alternatively, when the maintenance card is a plug-in SIM-format card inserted in the USB key 30, the card, provided with a crypto-processor, may decrypt the application data before upload to the terminal. Hence, the access to the data stored in the USB key memory is controlled and managed by the card.

Duplication of terminal applications may be achieved upon authorisation of the integrated circuit card. If a maintenance technician wishes to repair a terminal having a defective modem, he just plugs the USE key 30 in the USB port 16 of the terminal 10, collects all data of said terminal, in particular software applications and terminal configuration parameters, within the USB key memory 31, and download said software application and parameters into a new terminal having a functional modem. This is achieved under the control of the maintenance IC card.

Once the application data of the USE key are uploaded or once the application data of the terminal are downloaded for maintenance purpose, the USE key and the IC cards are disconnected from the terminal subject of maintenance and removed.

The above description of embodiments of the invention is not limitative. Other embodiments, not described, are part of the scope of the invention. In all embodiments, the card manages all security tasks and notably identification and encoding/decoding.

## Claims

1. A method for maintenance of a point of sales terminal (10) comprising a casing (11) said casing including a central processing unit (14) and a memory (15), said method comprising:
connecting (40) an electronic device (30) to a data port (16) of the terminal, said electronic device comprising a memory (31);
connecting (41) a maintenance integrated circuit card (20) to the terminal;
allowing authentication (42) of said card;
if the card is authenticated, uploading (44) the application data from the electronic device memory into the terminal memory or downloading application data from the terminal memory to the electronic device memory; and
disconnecting the electronic device and the integrated circuit card from the terminal.

2. The method of claim 1, wherein the integrated circuit card (20) controls the access rights to the application data stored in the electronic device memory (31).

3. The method of one of claims 1 or 2, wherein the application data stored in the electronic device memory (31) is encoded.

4. The method of claim 3, wherein the key for decoding the encoded application data is stored in a memory of the integrated circuit card (20).

5. The method of claim 4, wherein the key is loaded into the terminal.

6. The method of one of claims 3 to 5, wherein the application data are decoded.

7. The method of one of the previous claims, wherein the application data stored in the memory (31) of the electronic device (30) is paying.

8. The method of claim 7, wherein the card memory comprises a price list of the application data and prior to installation of said application data, payment is accepted.

9. The method of one of the previous claims, wherein the electronic device (30) is a USB key and the data port (16) is a USB port.

10. The method of claim 9, wherein the integrated circuit card is in a plug-in SIM card format and is inserted into a recess of the electronic device (30).

11. A system comprising a point of sales terminal (10) comprising a casing (11), said casing including a central processing unit (14), a memory (15) and a data port (16), **characterised in that** it further comprises an electronic device (30) able to be connected to said data port (16) and comprising a memory (31) loaded with application data, and a maintenance integrated circuit card (20) able to be connected to the terminal to be authenticated by the terminal, and **in that** the application data of the electronic device are uploaded in the terminal upon authentication of the maintenance card.

12. The system of claim 11, wherein the electronic device is a USB key.
